# EUROPEAN PATENT SPECIFICATION

(11) **EP 3 147 600 B1**
(45) Date of publication and mention of the grant of the patent: **26.08.2020**
(21) Application number: 16190676.3
(22) Date of filing: 26.09.2016
(51) Int. Cl.: F25D 3/10, F25B 19/00

(54) **REFRIGERATION APPARATUS**
KÜHLVORRICHTUNG
APPAREIL DE RÉFRIGÉRATION

(30) Priority: 25.09.2015 GB 201516982
(43) Date of publication of application: 29.03.2017
(73) Proprietor: Linde GmbH, 82049 Pullach (DE)
(72) Inventor: ALLWOOD, Michael, Rotherham South Yorkshire S66 3RR (GB)
(74) Representative: Gellner, Bernd

(56) References cited:
- EP-A2- 1 593 918
- EP-A2- 1 659 355
- WO-A1-2010/016758
- WO-A1-2013/050800
- GB-A- 2 508 017
- US-A- 3 068 105
- US-A- 5 267 446

## Description

### Field

The present invention relates to refrigeration apparatuses and methods, and in particular to the use of such apparatuses and methods for cooling compartments in a vehicle to different temperatures. More specifically, the invention relates to a refrigerated transportation system which uses a liquefied gas, such as liquid nitrogen (LIN), as the refrigerant, and to methods of supplying the refrigerant. In this context, reference can be made to EP 1 659 355 A2.

### Background

Traditionally, the majority of the world's chilled and frozen food was transported overland in refrigerated trucks and/or trailers. The trucks and trailers were refrigerated using mechanical refrigeration units which typically used diesel to fuel a compressor which circulated a refrigerant. However, this was problematic because the diesel combustion created air pollution and carbon dioxide emissions. Additionally, the mechanical refrigeration units created noise levels of 80 decibels and above and refrigerant leakage, which could reach levels of between 15 and 35%, led to additional pollution and costs.

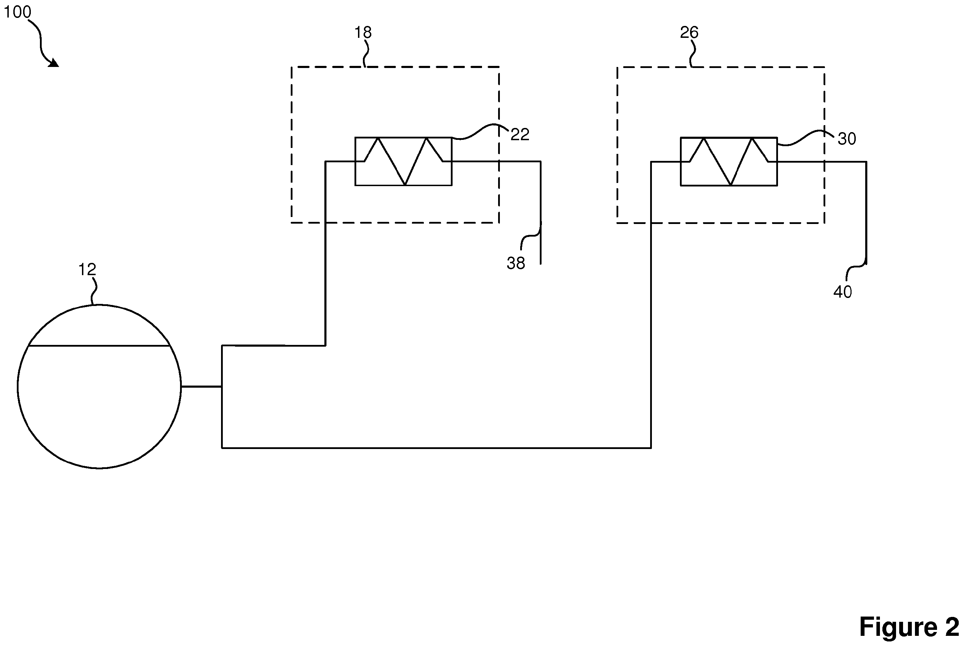

Accordingly, a cryogenic replacement for the mechanical, diesel-powered truck refrigeration systems was introduced, an example of which is known as FROSTCRUISE™. FROSTCRUISE™ provides an eco-friendly solution for the transportation of perishable chilled and frozen food, based on the use of liquid nitrogen (LIN) as the refrigerant. Currently, FROSTCRUISE™ is only capable of controlling the temperature in compartment, which can be either chilled or frozen, but not both. Thus, in order to operate FROSTCRUISE™ with multi-temperature zone capability, two separate process lines, evaporators and control are required, as shown in Figure 2. Each compartment receives the desired flow of nitrogen to satisfy the cooling requirements of the cargo, and once the nitrogen has vaporised, the gaseous nitrogen is expelled to atmosphere though valves 38, 40, respectively. This effectively provides two separate systems with the exception of the tank 12.

Accordingly, problems associated with such known refrigeration systems are that they use a separate cooling line for each compartment that needs to be kept cool, they incur high running costs, and require a large volume of LIN to be stored, leading to a large, heavy vessel. Also on cold days, LIN is emitted that results in a vapour cloud that could obscure vision of drivers behind the vehicle. Aspects of the present invention aim to address one or more of these drawbacks.

### Summary

According to a first aspect of the present invention, there is provided a refrigeration apparatus comprising all the features of claim 1.

Using the apparatus of the invention, it is possible to independently control the temperature in the two compartments. Furthermore, using the refrigerant expelled from the first compartment to cool the second compartment significantly reduces wastage of refrigerant. Accordingly, less refrigerant is needed, which can be contained in a smaller storage means. Furthermore, the volume of refrigerant expelled to the atmosphere is reduced, and so the extent of vapour clouds is reduced.

The first compartment and the second compartment are configured to be at different temperatures. For example, in one embodiment, the second compartment may be configured to be colder than the first compartment. However, in a preferred embodiment, the first compartment is configured to be colder than the second compartment. The first compartment may be configured to be a freezer compartment. For example, the temperature of a freezer compartment may be less than 0°C, preferably less than 10°C, or more preferably about -20°C. The second compartment may be configured to be a chilled compartment. For example, the temperature of the chilled compartment may be greater than 0°C but less than 10°C, preferably greater than 2°C but less than 10°C, or more preferably at about 5°C.

The second compartment comprises a refrigerant exhaust outlet by which the refrigerant is vented to the outside of the refrigeration apparatus. Preferably, the exhaust outlet of the second compartment vents refrigerant to the atmosphere. A further compartment may be coupled to the exhaust outlet of the second compartment.

The refrigerant may comprise liquefied gas, which may be selected from a group consisting of liquid carbon dioxide, liquid argon, liquid air or liquid nitrogen. Preferably, the refrigerant comprises liquid nitrogen (LIN).

The first compartment and the second compartment each comprise a heat exchanger. Each heat exchanger may be an evaporator.

The refrigeration apparatus further comprises temperature sensors for measuring the temperature inside the first compartment and inside the second compartment. Each compartment comprises a temperature sensor.

The refrigeration apparatus may comprise a pump to feed refrigerant from the refrigerant storage means to the first compartment. Refrigerant feeds from the refrigerant storage means to the first compartment along a first conduit. The refrigeration apparatus further comprises a first fluid control means, preferably on the first conduit, for controlling the rate at which refrigerant flows from the refrigerant storage means to the first compartment. Alternatively, the refrigerant storage means is a pressure vessel operating at a higher pressure than the first conduit, and so refrigerant is automatically fed along the first conduit by the pressure gradient instead of requiring a pump.

The refrigeration apparatus may further comprise a second pump to feed refrigerant from the refrigerant storage means to the second compartment. Refrigerant feeds from the refrigerant storage means to the second compartment along a second conduit. The refrigeration apparatus further comprises a second fluid control means, preferably on the second conduit, for controlling the rate at which refrigerant flows from the refrigerant storage means to the second compartment. Alternatively, the refrigerant storage means is a pressure vessel operating at a higher pressure than the second conduit, and so refrigerant is automatically fed along the second conduit by the pressure gradient instead of requiring the second pump.

The refrigeration apparatus comprises coupling means disposed between the first and second compartment, the coupling means being configured to temporarily prevent refrigerant from flowing between the first compartment and the second compartment, and to temporarily couple the exhaust outlet of the first compartment to the outside of the refrigeration apparatus, for example to atmosphere.

The second fluid control means is configured to feed refrigerant into the first compartment and the second compartment at different rates when flow of refrigerant between the first compartment and the second compartment is prevented.

The first and/or second fluid control means may each comprise a valve. The refrigeration apparatus comprises a controller for controlling the coupling means, the first fluid control means, and the second fluid control means according to the measured temperature of the first compartment and second compartment, such that the temperatures of the first compartment and second compartment are individually controllable.

The controller is configured to control the coupling means to temporarily prevent refrigerant from flowing between the first compartment and the second compartment, and control the second fluid control means to allow refrigerant to flow into the second compartment, when the temperature of the first compartment is less than or equal to a first threshold or set-point temperature, and when the temperature of the second compartment is greater than a second threshold or set-point temperature. The first threshold temperature may indicate that the first compartment is sufficiently cool to freeze items within the compartment. For example, the first threshold temperature may be set at a temperature which is less than 0°C, preferably less than 10°C, or more preferably about -20°C. The second threshold temperature may indicate that the second compartment is sufficiently cool to chill items within the compartment. For example, the second threshold may be set at a temperature which is greater than 0°C, preferably greater than 2°C, or more preferably at about +5°C.

The apparatus is preferably configured to control the rate at which refrigerant flows into the first compartment such that it is higher than the rate at which refrigerant flows into the second compartment when flow of refrigerant between the first compartment and the second compartment is prevented.

The first pump may be configured to feed refrigerant into the second compartment via the second fluid control means, preferably along the second conduit. The second pump may be configured to feed refrigerant from the storage means into the second compartment, preferably along the second conduit.

The exhaust outlet of the first compartment comprises a third fluid control means disposed between the coupling means and the outside of the refrigeration apparatus. Preferably, the third fluid control means comprises a valve.

The refrigeration apparatus may further comprise a one-way valve disposed between the coupling means and a node coupling the first fluid control means to the exhaust outlet of the second compartment, for preventing refrigerant from flowing into the first compartment via the second fluid control means.

According to a second aspect of the present invention, there is provided a vehicle comprising the refrigeration apparatus according to the first aspect.

The vehicle may be, for example, a railway carriage, truck, semi-trailer, car, van, lorry, aircraft, boat or ship. The vehicle is preferably a truck.

According to a third aspect of the present invention, there is provided a method of controlling a refrigeration apparatus according to the first aspect, the method comprising:
- feeding refrigerant from a refrigerant storage means to the first compartment via a refrigerant inlet in fluid communication with the storage means; and
- feeding refrigerant from the first compartment to the second compartment.

Preferably, the flow rate of refrigerant to the first compartment is substantially the same as the flow rate to the second compartment.

The method may comprise cooling the first compartment to a first temperature and cooling the second compartment to a second temperature.

The flow rate may be selected such that the ambient temperature in the first compartment is sufficiently cool to freeze items in the first compartment, and the ambient temperature in the second compartment is sufficiently cool to chill items in the second compartment.

The flow rate may be about 40 litres per hour.

The refrigerant may comprise liquefied gas, which may be selected from a group consisting of liquid carbon dioxide, liquid argon, liquid air or liquid nitrogen. Preferably, the refrigerant comprises liquid nitrogen (LIN).

The method may further comprise measuring the temperature of the first compartment and of the second compartment.

The method may further comprise, when the temperature of the first compartment is less than or equal to a first threshold:
configuring a coupling means to temporarily feed refrigerant from the first compartment to the outside of the refrigeration apparatus and to prevent flow of refrigerant between the first compartment and the second compartment; and
operating a second fluid control means to feed refrigerant to flow at a different flow rate into the second compartment.

The different flow rate may be higher than the flow rate.

The method may further comprise, when the temperature of the first compartment is greater than the first threshold and when the temperature of the second compartment is greater than a second threshold, configuring the coupling means to feed refrigerant in the first compartment to flow into the second compartment.

All features described herein (including any accompanying claims, abstract and drawings), and/or all of the steps of any method or process so disclosed, may be combined with any of the above aspects in any combination, except combinations where at least some of such features and/or steps are mutually exclusive.

### Brief Description of the Figures

Embodiments of the present invention will now be described, by way of example only, with reference to the accompanying drawings, in which:
Figure 1 is a schematic representation of a cryogenic refrigeration vehicle located at a liquid nitrogen (LIN) filling station;
Figure 2 is a schematic diagram showing a prior art refrigeration apparatus;
Figure 3 shows a refrigeration system;
Figure 4 shows an embodiment of the refrigeration system according to the invention;
Figure 5 shows the embodiment of the refrigeration system shown in Figure 4 in a second configuration; and
Figure 6 shows a flowchart of a process for operating a refrigeration system according to an embodiment of the present invention.

### Detailed Description

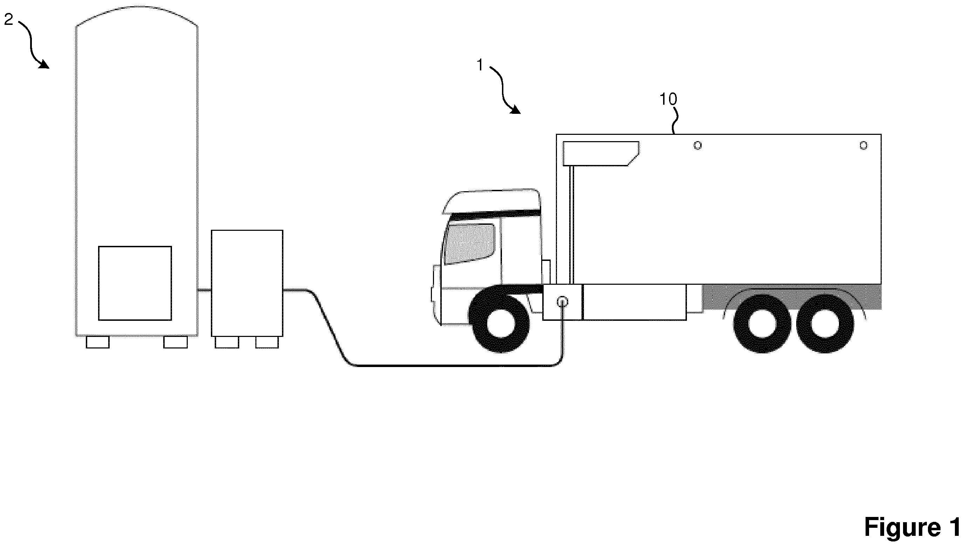

With reference to Figure 1, a cryogenic refrigeration vehicle 1 is shown at a refrigerant filling station 2. In this embodiment, the cryogenic refrigeration vehicle 1 is an overground truck. However, the vehicle 1 may be any vehicle used to transport items that need to be kept cold. For example the cryogenic refrigeration vehicle 1 may be a train, ship, or aircraft. The vehicle 1 comprises a storage container 10 at the rear for storing items that need to be kept cool or frozen, and a refrigeration system 100, 200, 300 is described with reference to Figures 2 to 6.

The refrigeration system 100, 200, 300 is not a closed system. Refrigerant is vented into the atmosphere outside of the vehicle 1 once it has passed through the refrigeration system 100, 200, 300, where it can cause obscuring vapour trails on a cold day. To replenish refrigerant, the vehicle 1 refills at a refrigerant filling station 2, as shown in Figure 1. The refrigerant is pumped from external tanks, such as those found buried in the ground at car fuelling stations, or tanks positioned above ground, into the vehicle 1. The refrigerant is pumped into an internal tank 12 within the vehicle 1.

In this and later described embodiments, the refrigerant is liquid nitrogen (LIN). However, any suitable refrigerant could be used, for example, liquid helium and "dry ice".

A refrigeration system 100 according to the state of the art will now be described with reference to Figure 2. The refrigeration system 100 is installed in the storage container 10 of a vehicle 1. The LIN is stored in an insulated on-board tank 12. When it is desired to cool two different compartments 18, 26 of the container 10 to two different temperatures, refrigerant (LIN) is separately and independently piped into the two compartments 18, 26. Each of the two compartments 18, 26 comprise a heat exchanger 22, 30, which cause the LIN to increase in temperature while decreasing the temperature of the respective compartment 18, 26, and chilling (or freezing) the cargo therein. The heat exchangers 22, 30 may be evaporators.

The cooling efficiency of a refrigerant is determined by the rate at which it flows through a region to be cooled. The faster the refrigerant flows, the faster it can remove heat from a region and the cooler that region will become. For example, in the prior art refrigeration system 100 of Figure 2, LIN flows through the first compartment 18 at a rate of 40 litres per hour, and flows through the second compartment 26 at a rate of 20 litres per hour. When in the liquid state, nitrogen has a temperature of -196°C. Accordingly, the first compartment 18 is configured to be a compartment for freezing goods, when the ambient temperature is about -20°C. The second compartment 18 is configured to be a compartment for chilling goods, for example when the ambient temperature is about +5°C.

After passing through the first heat exchanger 22 disposed in the freezing compartment 18, the LIN is expelled to the outside of the storage container 10 to atmosphere through a first exhaust outlet 38. Similarly, after passing through the second heat exchanger 30 disposed in the chilled compartment 26, the LIN is passed to the outside of the storage container 10 to atmosphere through a second exhaust outlet 40. LIN enters the first heat exchanger 22 at a temperature of -196°C, and leaves the first heat exchanger 22 at a temperature of -35°C. In other words, the LIN that exits the freezing compartment 18 is still relatively cold, and capable of being used to impart additional cooling work. However, in the prior art apparatus 100, the LIN is wasted by being exhausted to the atmosphere. Additionally, by having two exhaust outlets 38, 40, there is a greater potential for obscuring and unsightly vapour clouds to be generated outside of the vehicle 1.

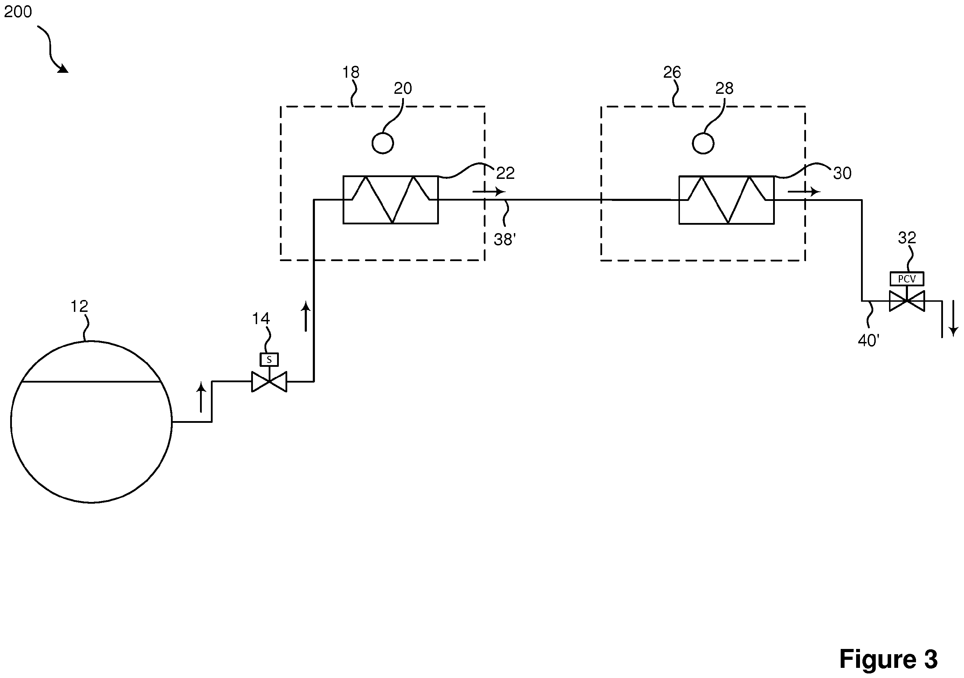

Problems associated with the prior art described with reference to Figure 2 are overcome by embodiments of the present invention. One embodiment of the present invention will now be described with reference to Figure 3. Here, the refrigeration system 200 is installed in the storage container 10 in the rear of a vehicle 1. The LIN is stored in an insulated on-board tank 12. The tank 12 is this embodiment is maintained at a higher pressure than the rest of the system. Therefore, when a main valve on the tank 12 is opened, LIN automatically flows into lines coupling the tank 12 to the region(s) of the storage container 10 that need to be cooled. In other embodiments, a pump may be used to pump LIN from the tank 12 to the region(s) to be cooled.

The storage container 10 is divided into a first compartment 18 and a second compartment 26, in a similar manner to as previously described with reference to Figure 2. In this embodiment, the first compartment 18 is configured to be a freezer compartment and the second compartment 26 is configured to be a chilled compartment.

A refrigerant fluid control means 14 is disposed on the line between the tank 12 and the freezer compartment 18. The fluid control means 14 is this embodiment is a valve 14, which can be a solenoid valve, which is used to control the flow of refrigerant into the freezer compartment 18. A solenoid valve is configured to be either on or off, and so either allows or prevents refrigerant flowing into the freezer compartment 18.Therefore, the fluid control means 14 may be any suitable means for allowing and preventing the flow of refrigerant.

A first temperature sensor 20 is disposed in the freezer compartment 18, and a second temperature sensor 28 is disposed in the chilled compartment 26. The temperature sensors 20, 28 may be, for example, thermistors or thermostats. The temperature sensors 20, 28 are coupled to a controller, which is configured to issue a warning when the temperature in either compartment 18, 26 exceeds a respective threshold or set-point.

As shown in Figure 3, the exhaust outlet 38' of the freezer compartment 18 is coupled to the inlet of the chilled compartment 26, and this allows refrigerant to be reused after passing through the freezer compartment 18 rather than being wasted to atmosphere. However, unlike in the prior art system 100, the reused refrigerant entering the chilled compartment 26 flows at the same rate at which it flows through the freezer compartment 18. Therefore, refrigerant flows through the chilled compartment 26 at a higher rate than it does in the prior art system 100. Although the initial temperature of the refrigerant entering the chilled compartment 26 is greater than it would be in the prior art system 100, the increased volume passing through the chilled compartment 26 is enough to remove excess heat energy from the chilled compartment 26 to ensure the required temperature is achieved.

In the refrigeration system 200 of Figure 3, LIN flows into, and through, the freezer compartment 18 at a rate of 40 litres per hour. As the refrigerant system 200 is substantially lossless prior to LIN reaching the exhaust outlet 40' of the chilled compartment 26, LIN also flows into, and through, the chilled compartment 26 at a rate of 40 litres per hour. When in the liquid state, nitrogen has a temperature of - 196°C. Therefore, the LIN reaching the first heat exchanger 22 is approximately at a temperature of -196°C. In order to maintain an ambient temperature of approximately -20°C within the freezer compartment 18, on leaving the first heat exchanger 22, the temperature of the LIN is approximately between -35°C and -40°C. Therefore, on reaching the second heat exchanger 22, the temperature of the LIN is approximately between -35°C and -40°C. In order to maintain an ambient temperature of approximately +5°C within the chilled compartment 26, on leaving the second heat exchanger 30, the temperature of the LIN is approximately 0°C.

Upon exiting the second heat exchanger 30 in the chilled compartment 26, any unevaporated LIN is expelled to the outside of the storage container 10 to the atmosphere through a second exhaust outlet 40'. The second exhaust outlet 40 includes a valve 32 for controlling the rate at which LIN is passed to the atmosphere. The valve 32 is a flow control valve (otherwise known as a proportional control valve); however, it would be appreciated that any suitable type of valve may be used for varying the flow of fluid through the exhaust outlet 40'. The controller may be configured to control the valve 32 to increase or decrease the rate of flow of LIN passing through the apparatus depending on the temperature sensing result. The valve 32 varies the flow between 0% and 100%. Therefore the flow rate, and hence temperature of the first and second compartments 18, 26, is determined by the opening position of valve 32.

As LIN has been reused in the described refrigeration system 200, a reduced amount of LIN is exhausted into the atmosphere as compared with the prior art system 100. Accordingly, less LIN is required, and so there is a reduced vessel size requirement, resulting in the vehicle carrying less weight and bulk, and so the embodiment illustrated in Figure 3 displays significant advantages over the prior art apparatus 100, but is not part of the present invention.

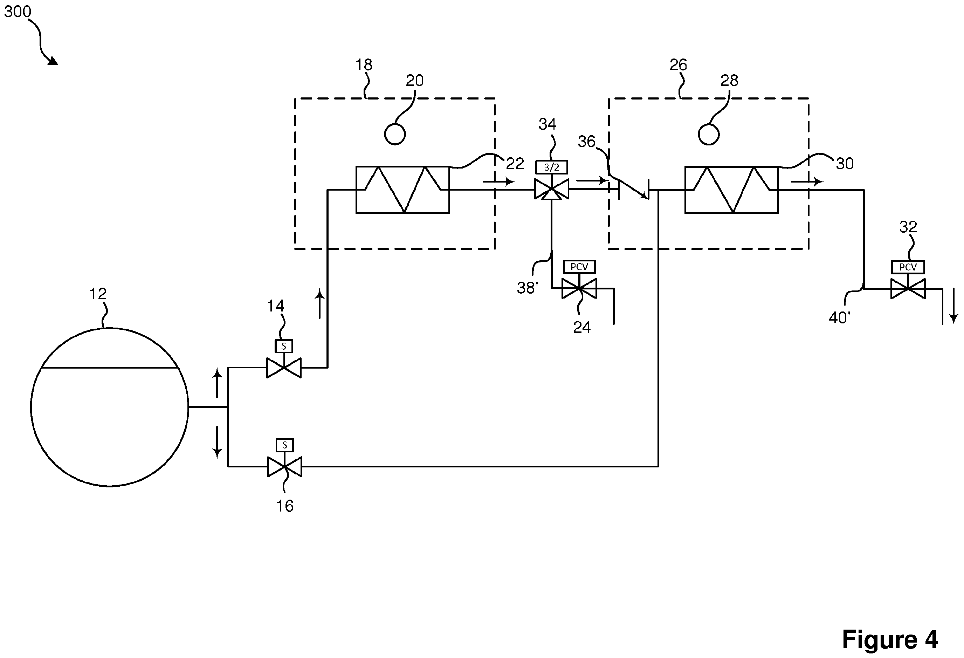

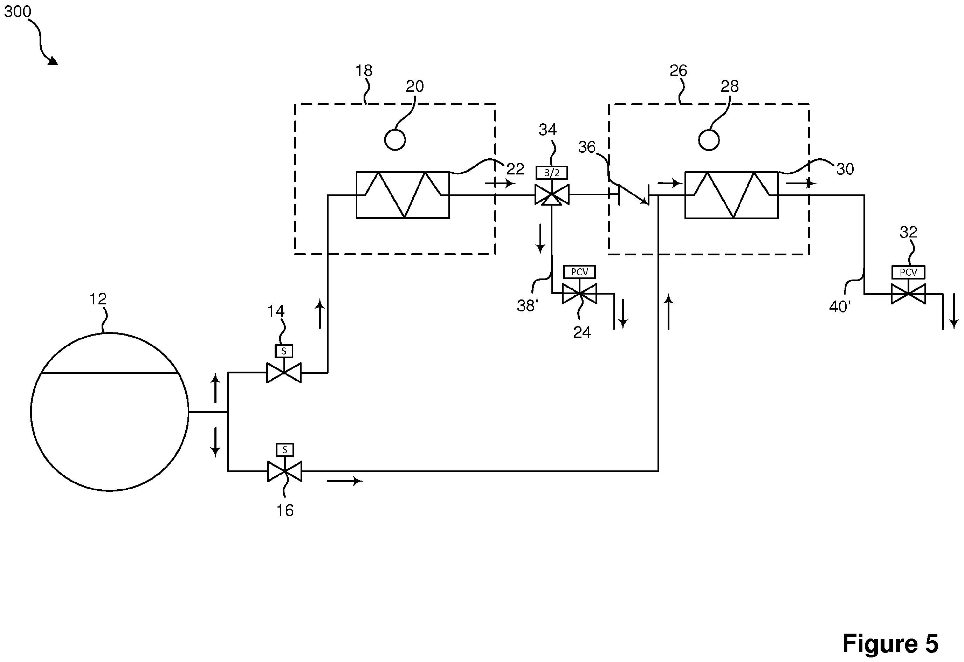

However, there is a risk with the system 200 that the two compartments 18, 26 could reach the desired temperatures at different rates. Therefore, in the present invention, it is advantageous to provide a means for increasing the rate at which one of the compartments 18, 26 is cooled down. This advantage is provided by the embodiment of the refrigeration system shown in Figure 4 and Figure 5.

Referring to Figures 4 and 5, a coupling means 34, such as a three way valve, is disposed on the line between the first (i.e. freezing) compartment 18 and the second (i.e. chilling) compartment 26. Alternatively, instead of a three way valve, the coupling means 34 may comprise two 2/2-way solenoid valves arranged to block and divert the flow of LIN accordingly. The coupling means 34 is further coupled to the outside of the storage container 10 by exhaust outlet 38'. In other words, the coupling means 34 is configured to control the first exhaust outlet 38' to direct the flow of refrigerant from the first compartment 18 to either the second compartment 26 or to the atmosphere. Furthermore, in this embodiment, the second (i.e. chilling) compartment 26 is coupled directly to the LIN storage tank 12. The line coupling the LIN storage tank 12 to the first compartment 26 includes a first fluid control means 14, and the line coupling the LIN storage tank 12 and the second compartment 26 includes a second fluid control means 16. The first and second fluid control means 14, 16 are solenoid valves in this embodiment; however, it would be appreciated that any suitable type of valve may be used for starting or stopping the flow of refrigerant. The first and second fluid control means 14, 16 are controlled using a controller.

In one embodiment, a pump (not shown) is used to pump refrigerant from the LIN storage tank 12 into the first compartment 18 and the second compartment 26 via the second fluid control means 16. In other embodiments, two separate pumps (not shown) are used, one for each compartment 18, 26. In other embodiments, no pumps are used, and the LIN storage tank 12 is maintained at a higher pressure than the rest of the system 300. The first exhaust outlet 38' includes a third fluid control means 24 for controlling the rate at which refrigerant is passed to the outside. The third fluid control means 24 is a flow control valve (otherwise known as a proportional control valve); however, it would be appreciated that any suitable type of valve may be used for varying the flow rate of refrigerant to the atmosphere. Therefore, the third fluid control means can be used to control the temperature of the first compartment 18 when the temperatures of the compartments 18, 26 are being individually controlled.

The temperature sensors 20, 28 are configured to monitor the temperature in each compartment 18, 26, respectively. The controller controls the first and second fluid control means 14, 16 and the coupling means 34 depending on the measured temperature. For example, the controller configures the refrigeration system 300 to be in a first mode if the temperature in each compartment 18, 26 is greater than a respective threshold or set-point, and a second mode if the temperature in one compartment 18, 26 is less than or equal to the respective threshold. The second mode allows individual control over the temperature, or rate of cooling, of each compartment 18, 26, whereas the first mode does not.

In other words, when it is desired to cool two different compartments 18, 26 to two different temperatures (for example, a freezer compartment and a chilled compartment), one compartment may reach its operating temperature before the other compartment reaches its operating temperature. While both compartments are cooling from a first temperature down to their operating temperatures, the refrigeration system 300 is operated in the first mode. If one compartment reaches its operating temperature while the other compartment is still cooling from the first temperature to its operating temperature, then the refrigeration system 300 is operated in the second mode so that the compartment undergoing cooling cools faster, and the compartment at the operating temperature does not become too cold. The refrigeration apparatus 300 can be switched between the first and second modes as many times as is necessary to maintain the operating temperatures in each compartment 18, 30.

The operating temperature of the first compartment 18 is sufficient to freeze items within the first compartment 18. For example, the operating temperature of the first compartment 18 is -20°C. The operating temperature of the second compartment 26 is sufficient to chill items within the second compartment 26. For example, the operating temperature of the second compartment 26 is +5°C. When the temperatures of both compartments 18, 30 are at the respective operating temperatures, the flow of refrigerant is stopped at the LIN storage tank 12. The flow is reactivated when the temperature of one or both compartments 18, 26 is greater than a respective threshold.

A one-way valve 36 is disposed between the coupling means 34 and a node coupling a conduit comprising the second fluid control means 16 to the second compartment 26, for preventing refrigerant from flowing into the first compartment 18 via the second fluid control means 16. The one-way valve 36 in this embodiment is a check valve, although it will be appreciated that other types of valves may be used for preventing backflow of refrigerant.

In other embodiments, the exhaust outlet 38' of the first compartment 18 and the line coupling the tank 12 to the second heat exchanger 30 are not coupled together at the node. In these embodiments, the one-way valve 36 is not necessary. In other words, in these embodiments, the second compartment 26 has two input lines.

A further one-way valve may be disposed in the conduit comprising the second fluid control means 16, to prevent refrigerant from flowing from the first compartment 18 back to the tank 12 instead of into the second compartment 26.

In the first mode, shown in Figure 4, the first fluid control means (valve) 14 is opened to allow refrigerant to flow from the tank 12 to the first (freezer) compartment 18. The second valve 16 is closed to prevent refrigerant from flowing directly into the second (chiller) compartment from the tank 12. The valve 34 is arranged to allow refrigerant to flow from the first (freezer) compartment 18 to the second (chiller) compartment 26. As such, the valve 34 prevents refrigerant being exhausted outside of the storage compartment 10 before reaching the second compartment 26.

In the second mode, shown in Figure 5, the temperature of each of the first and second compartments 18, 26 is individually controllable. The first valve 14 is opened to allow refrigerant to flow from the tank 12 to the first (freezer) compartment 18. The valve 16 is opened to allow refrigerant to flow directly into the second (chiller) compartment from the tank 12. Alternatively, one of the first and second valves 14, 16 may be closed such that refrigerant is not supplied to one of the compartments 18, 26.

The valve 34 is arranged to stop refrigerant from flowing from the first (freezer) compartment 18 to the second (chiller) compartment 26. Instead, the valve 34 allows refrigerant to be exhausted outside of the storage compartment 10 before reaching the second compartment 26.

In a further embodiment, in the second mode, the refrigeration system 300 is configured to allow refrigerant to flow from the first compartment (18) to the second compartment 26, in addition to allowing refrigerant to flow from the tank 12 into the second compartment 26 directly via the second valve 16. This provides a "boost" to the cooling efficiency of the heat exchanger 30 in the second compartment 26. In this embodiment, the second compartment 26 is cooled both by reused refrigerant, and refrigerant supplied directly from the tank 12. In this embodiment, the second compartment 26 can be cooled quickly, while not using as much refrigerant as the second mode described in relation to previous embodiments.

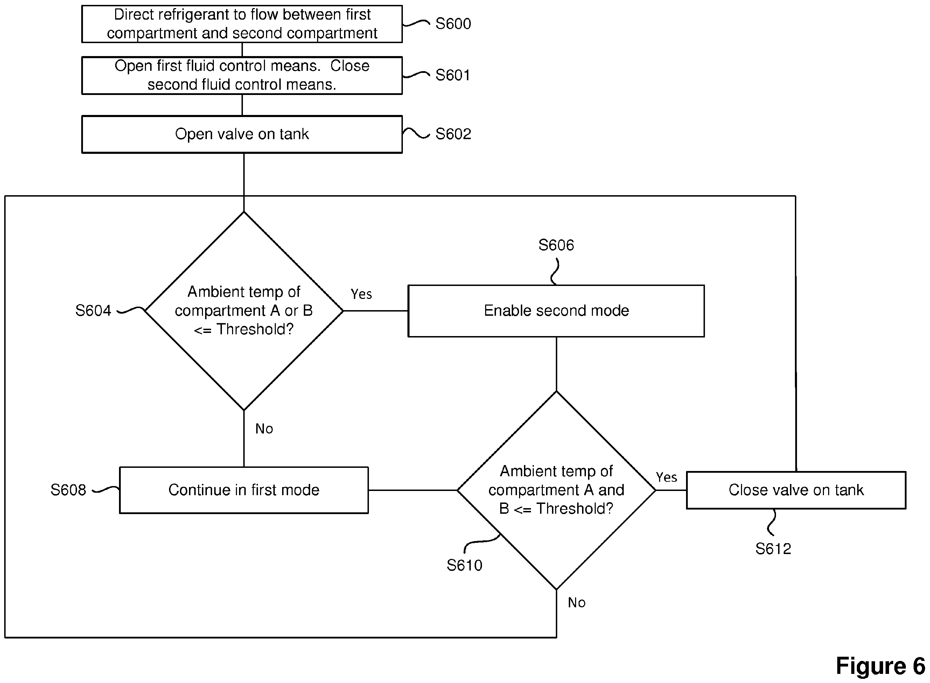

A process for controlling a refrigeration system 300 according to the embodiments described in Figures 4 and 5 will now be described with reference to Figure 6. Here, it is assumed that the refrigeration system 300 is initially switched off (the valve on the tank 12 is closed), and the first and second compartments 18, 26 are at room temperature. In a first step S600, the coupling means 34 is configured to allow refrigerant to flow between the first compartment 18 and the second compartment 26. The coupling means 34 is arranged to prevent refrigerant from flowing to the outside of the refrigeration system 300 before it reaches the second compartment 26. In step S601, the first fluid control means 14 is opened to allow refrigerant to flow into the first compartment 18. The second fluid control means 16 is closed to prevent refrigerant from flowing directly between the tank and the second compartment.

In step S602, the valve on the tank 12 is opened so that refrigerant flows via the first fluid control means 14 into the first compartment 18. In other embodiments, a pump is used to pump refrigerant through the refrigeration system 300. In other words, the refrigeration system 300 initially operates in the first mode, as set by steps S600, S601 and S602.

At step S604, ambient temperatures of the first compartment 18 and the second compartment 26 are measured. If the ambient temperature of one compartment, but not the other, is less than or equal to a threshold specific to that compartment, then the refrigeration system 300 is configured to enter the second mode in step S606, as previously described with reference to Figure 5. In other words, it is determined whether one of the compartments 18, 26, but not the other, has substantially reached its operating temperature while the other compartment 18, 26 has not.

For example, the first threshold temperature, relating to the first compartment 18, indicates that the first compartment 18 is sufficiently cool to freeze items within the first compartment 18. The second threshold temperature, relating to the second compartment 26, indicates that the second compartment 26 is sufficiently cool to chill items within the second compartment 26. Alternatively to the ambient temperature, in some embodiments it is the temperature of the refrigerant leaving the heat exchangers 22, 30 that are compared to thresholds. In further embodiments, it is the temperatures of items within each of the compartments 18, 26 that are compared to thresholds.

In step S608, if the ambient temperature in neither of the first and second compartments 18, 26 is less than or equal to the respective threshold, then the refrigeration system 300 continues to be operated in the first mode. In other words, if the first compartment 18 and the second compartment 26 are both cooling to their respective operating temperatures, then the refrigeration system 300 operates in the first mode whereby exhausted refrigerant from the first compartment 18 is used to cool the second compartment 26.

At step S610 it is determined whether or not the ambient temperatures in both of the first compartment 18 and second compartment 26 are less than or equal to the respective first and second thresholds. In other words, it is determined whether or not both compartments 18, 26 have substantially reached their respective operating temperatures. If both compartments 18, 26 are substantially operating at their operating temperatures then at step S612 the valve on the tank 12 is turned off to prevent further refrigerant from entering the refrigeration system 200 and cooling the first compartment 18 and second compartment 26 more than necessary. In other embodiments, at step S612, the valve on the tank 12 is left open, but the first fluid control means 14 and second fluid control means 16 are closed. The valve on the tank 12 is re-opened when the ambient temperature within one or more of the compartments 18, 26 exceeds a respective threshold. This is determined in step S604.

Further in step S610, if the ambient temperatures within both of the first compartment 18 and second compartment 26 are not less than or equal to their respective thresholds, then S604 is repeated to determine whether the refrigeration system 300 should operate in the first mode or the second mode. Step S604 and step S610 can be repeated until the tank 12 runs out of refrigerant, or until the vehicle 1 no longer needs to cool items.

It would be readily understood that this is just one example of the way in which the refrigeration system 300 operates. In some embodiments, step S610 may take place before step S604, or concurrently with step S604 in order to provide more responsive feedback.

Advantages of the refrigeration system reside in the provision of the refrigerant inlet of the second compartment 26 being coupled to the LIN exhaust outlet of the first compartment 18. This allows refrigerant to be reused, so that less refrigerant is used by the apparatus compared to prior art systems of similar size. This means small vehicles are needed, resulting in the vehicle carrying less weight. This also results in a reduced volume of refrigerant being emitted into the atmosphere from the refrigeration system.

## Claims

1. A refrigeration apparatus (300) comprising:
- refrigerant storage means (12);
- a first compartment (18) comprising a refrigerant inlet in fluid communication with the refrigerant storage means (12) and a refrigerant exhaust outlet (38'); and
- a second compartment (26) comprising a refrigerant inlet in fluid communication with the refrigerant exhaust outlet (38') of the first compartment (18), wherein the refrigeration apparatus (300) is configured to feed a refrigerant from the refrigerant storage means (12) to the second compartment (26) via the first compartment (18), wherein the second compartment (26) comprises a refrigerant exhaust outlet (40') by which the refrigerant is vented to the outside of the refrigeration apparatus (300),
wherein the first compartment (18) and the second compartment (26) are configured to be at different temperatures,
wherein the first compartment (18) and the second compartment (26) each comprise a heat exchanger (22, 30),
the refrigeration apparatus (300) further comprising:
- a first fluid control means (14) for controlling the rate at which refrigerant flows from the refrigerant storage means (12) along a first conduit to the first compartment (18);
- a second fluid control means (16) for controlling the rate at which refrigerant flows from the refrigerant storage means (12) along a second conduit to the second compartment (26);
- temperature sensors (20, 28) for measuring the temperature inside the first compartment (18) and inside the second compartment (26); and
- coupling means (34) disposed between the first compartment (18) and the second compartment (26), wherein the coupling means (34) is configured to temporarily prevent refrigerant from flowing between the first compartment (18) and the second compartment (26), and to temporarily couple the exhaust outlet (38') of the first compartment (18) to the outside of the refrigeration apparatus (300), wherein the first fluid control means (14) and the second fluid control means (16) are configured to feed refrigerant into the first compartment (18) and into the second compartment (26) at different rates when flow of refrigerant between the first compartment (18) and the second compartment (26) is prevented; and
- a controller for controlling the coupling means (34), the first fluid control means (14), and the second fluid control means (16) according to the measured temperature of the first compartment (18) and second compartment (26), such that the temperatures of the first compartment (18) and second compartment (26) are individually controllable, wherein the controller is configured to control the coupling means (34) to temporarily prevent refrigerant from flowing between the first compartment (18) and the second compartment (26), and control the second fluid control means (16) to allow refrigerant to flow into the second compartment (26), when the temperature of the first compartment (18) is less than or equal to a first threshold or set-point temperature, and when the temperature of the second compartment (26) is greater than a second threshold or set-point temperature, wherein the exhaust outlet (38') of the first compartment (18) comprises a third fluid control means (24) disposed between the coupling means (34) and the outside of the refrigeration apparatus (300).

2. The refrigeration apparatus according to claim 1,
- wherein the temperature of the first compartment (18) is configured to be less than 0°C, or less than 10°C, or about -20°C; and
- wherein the temperature of the second compartment (26) is configured to be greater than 0°C but less than 10°C, or greater than 2°C but less than 10°C, or at about 5°C.

3. The refrigeration apparatus according to claim 1 or 2, wherein the refrigerant comprises liquefied gas.

4. The refrigeration apparatus according to any one of the preceding claims, further comprising a pump to feed refrigerant from the refrigerant storage means (12) to the first compartment (18).

5. The refrigeration apparatus according to any one of the preceding claims, further comprising a second pump to feed refrigerant from the refrigerant storage means (12) to the second compartment (26).

6. The refrigeration apparatus according to any one of the preceding claims, wherein the controller is configured to control the rate at which refrigerant flows into the first compartment (18) such that it is higher than the rate at which refrigerant flows into the second compartment (26) when flow of refrigerant between the first compartment (18) and the second compartment (26) is prevented.

7. The refrigeration apparatus according to any one of the preceding claims, further comprising a one-way valve (36) disposed between the coupling means (34) and a node coupling the first fluid control means (14) to the exhaust outlet (40') of the second chamber (26), for preventing refrigerant from flowing into the first compartment (18) via the second fluid control means (16).

8. A vehicle (10) comprising the refrigeration apparatus (300) according to any one of the preceding claims.

9. A method of controlling a refrigeration apparatus (300) according to any one of the preceding claims, the method comprising:
- feeding a refrigerant from a refrigerant storage means (12) to the first compartment (18) via a refrigerant inlet in fluid communication with the refrigerant storage means (12); and
- feeding refrigerant from the first compartment (18) to the second compartment (26).

10. The method according to claim 9, wherein the flow rate of refrigerant to the first compartment (18) is substantially the same as the flow rate to the second compartment (26).

11. The method according to claim 9 or 10, further comprising
- cooling the first compartment (18) to a first temperature, and
- cooling the second compartment (26) to a second temperature.

12. The method according claim 11, wherein the flow rate is selected such that
- the ambient temperature in the first compartment (18) is sufficiently cool to freeze items in the first compartment (18), and
- the ambient temperature in the second compartment (26) is sufficiently cool to chill items in the second compartment (26).

13. The method according to claim 12, wherein the flow rate is about 40 litres per hour.

14. The method according to any one of claims 9 to 13, wherein the refrigerant comprises liquefied gas.

15. The method according to any one of claims 9 to 14, further comprising measuring the temperature of the first compartment (18) and of the second compartment (26).

16. The method according to claim 15, further comprising, when the temperature of the first compartment (18) is less than or equal to a first threshold:
- configuring a coupling means (34) to temporarily feed refrigerant from the first compartment (18) to the outside of the refrigeration apparatus (300) and to prevent flow of refrigerant between the first compartment (18) and the second compartment (26); and
- operating a second fluid control means (16) to feed refrigerant to flow at a different flow rate into the second compartment (26).

17. The method according to claim 16, wherein the different flow rate is higher than the flow rate.

18. The method according to claim 16 or 17, further comprising, when the temperature of the first compartment (18) is greater than the first threshold and when the temperature of the second compartment (26) is greater than a second threshold, configuring the coupling means (34) to feed refrigerant in the first compartment (18) to flow into the second compartment (26).

## Patentansprüche

1. Kühlvorrichtung (300), umfassend:
- Kältemittelspeichermittel (12);
- eine erste Kammer (18), die einen Kältemitteleinlass in Fluidverbindung mit dem Kältemittelspeichermittel (12) und einen Kältemittelabführungsauslass (38') umfasst; und
- eine zweite Kammer (26), die einen Kältemitteleinlass in Fluidverbindung mit dem Kältemittelabführungsauslass (38') der ersten Kammer (18) umfasst, wobei die Kühlvorrichtung (300) dazu konfiguriert ist, der zweiten Kammer (26) ein Kältemittel aus dem Kältemittelspeichermittel (12) via die erste Kammer (18) zuzuführen, wobei die zweite Kammer (26) einen Kältemittelabführungsauslass (40') umfasst, durch den das Kältemittel in die äußere Umgebung der Kühlvorrichtung (300) ausgelassen wird,
wobei die erste Kammer (18) und die zweite Kammer (26) so konfiguriert sind, dass sie auf verschiedenen Temperaturen sind,
wobei die erste Kammer (18) und die zweite Kammer (26) jeweils einen Wärmetauscher (22, 30) umfassen,
wobei die Kühlvorrichtung (300) ferner umfasst:
- ein erstes Fluidregelungsmittel (14) zum Regeln der Geschwindigkeit, mit der Kältemittel aus dem Kältemittelspeichermittel (12) eine erste Leitung entlang zu der ersten Kammer (18) strömt;
- ein zweites Fluidregelungsmittel (16) zum Regeln der Geschwindigkeit, mit der Kältemittel aus dem Kältemittelspeichermittel (12) eine zweite Leitung entlang zu der zweiten Kammer (26) strömt;
- Temperatursensoren (20, 28) zum Messen der Temperatur innerhalb der ersten Kammer (18) und innerhalb der zweiten Kammer (26); und
- ein Kopplungsmittel (34), das zwischen der ersten Kammer (18) und der zweiten Kammer (26) angeordnet ist, wobei das Kopplungsmittel (34) dazu konfiguriert ist, zeitweise zu verhindern, dass Kältemittel zwischen der ersten Kammer (18) und der zweiten Kammer (26) strömt, und zeitweise den Abführungsauslass (38') der ersten Kammer (18) mit der äußeren Umgebung der Kühlvorrichtung (300) zu koppeln, wobei das erste Fluidregelungsmittel (14) und das zweite Fluidregelungsmittel (16) dazu konfiguriert sind, Kältemittel mit verschiedenen Geschwindigkeiten der ersten Kammer (18) und der zweiten Kammer (26) zuzuführen, wenn das Strömen des Kältemittels zwischen der ersten Kammer (18) und der zweiten Kammer (26) verhindert wird; und
- einen Regler zum Regeln des Kopplungsmittels (34), des ersten Fluidregelungsmittels (14) und des zweiten Fluidregelungsmittels (16) nach Maßgabe der gemessenen Temperatur der ersten Kammer (18) und der zweiten Kammer (26), derart, dass die Temperaturen der ersten Kammer (18) und der zweiten Kammer (26) einzeln regelbar sind, wobei der Regler dazu konfiguriert ist, das Kopplungsmittel (34) so zu regeln, dass es zeitweise verhindert, dass Kältemittel zwischen der ersten Kammer (18) und der zweiten Kammer (26) strömt, und das zweite Fluidregelungsmittel (16) so zu regeln, dass es ein Einströmen von Kältemittel in die zweite Kammer (26) ermöglicht, wenn die Temperatur der ersten Kammer (18) niedriger als oder gleich eine(r) erste(n) Schwellen- oder Sollwerttemperatur ist und wenn die Temperatur der zweiten Kammer (26) höher als eine zweite Schwellen- oder Sollwerttemperatur ist, wobei der Abführungsauslass (38') der ersten Kammer (18) ein drittes Fluidregelungsmittel (24) umfasst, das zwischen dem Kopplungsmittel (34) und der äußeren Umgebung der Kühlvorrichtung (300) angeordnet ist.

2. Kühlvorrichtung nach Anspruch 1,
- wobei die Temperatur der ersten Kammer (18) so konfiguriert ist, dass sie niedriger als 0 °C oder niedriger als 10 °C oder etwa -20 °C ist; und
- wobei die Temperatur der zweiten Kammer (26) so konfiguriert ist, dass sie höher als 0 °C, aber niedriger als 10 °C, oder höher als 2 °C, aber niedriger als 10 °C, oder etwa 5 °C ist.

3. Kühlvorrichtung nach Anspruch 1 oder 2, wobei das Kältemittel verflüssigtes Gas umfasst.

4. Kühlvorrichtung nach einem der vorstehenden Ansprüche, ferner eine Pumpe umfassend, um der ersten Kammer (18) Kältemittel aus dem Kältemittelspeichermittel (12) zuzuführen.

5. Kühlvorrichtung nach einem der vorstehenden Ansprüche, ferner eine zweite Pumpe umfassend, um der zweiten Kammer (26) Kältemittel aus dem Kältemittelspeichermittel (12) zuzuführen.

6. Kühlvorrichtung nach einem der vorstehenden Ansprüche, wobei der Regler dazu konfiguriert ist, die Geschwindigkeit, mit der Kältemittel in die erste Kammer (18) strömt, so zu regeln, dass sie höher als die Geschwindigkeit ist, mit der Kältemittel in die zweite Kammer (26) strömt, wenn ein Strömen von Kältemittel zwischen der ersten Kammer (18) und der zweiten Kammer (26) verhindert wird.

7. Kühlvorrichtung nach einem der vorstehenden Ansprüche, ferner ein Einwegventil (36) umfassend, das zwischen dem Kopplungsmittel (34) und einem Knotenpunkt, der das erste Fluidregelungsmittel (14) mit dem Abführungsauslass (40') der zweiten Kammer (26) koppelt, angeordnet ist, um zu verhindern, dass Kältemittel via das zweite Fluidregelungsmittel (16) in die erste Kammer (18) strömt.

8. Fahrzeug (10), umfassend die Kühlvorrichtung (300) nach einem der vorstehenden Ansprüche.

9. Verfahren zum Regeln einer Kühlvorrichtung (300) nach einem der vorstehenden Ansprüche, wobei das Verfahren umfasst:
- Zuführen, der ersten Kammer (18), eines Kältemittels aus einem Kältemittelspeichermittel (12) via einen Kältemitteleinlass in Fluidverbindung mit dem Kältemittelspeichermittel (12); und
- Zuführen, der zweiten Kammer (26), von Kältemittel aus der ersten Kammer (18).

10. Verfahren nach Anspruch 9, wobei der Volumenstrom des Kältemittels zu der ersten Kammer (18) im Wesentlichen gleich dem Volumenstrom zu der zweiten Kammer (26) ist.

11. Verfahren nach Anspruch 9 oder 10, ferner umfassend
- Kühlen der ersten Kammer (18) auf eine erste Temperatur und
- Kühlen der zweiten Kammer (26) auf eine zweite Temperatur.

12. Verfahren nach Anspruch 11, wobei der Volumenstrom derart gewählt ist, dass
- die Raumtemperatur in der ersten Kammer (18) kalt genug ist, um in der ersten Kammer (18) Artikel einzufrieren, und
- die Raumtemperatur in der zweiten Kammer (26) kalt genug ist, um in der zweiten Kammer (26) Artikel zu kühlen.

13. Verfahren nach Anspruch 12, wobei der Volumenstrom etwa 40 Liter pro Stunde beträgt.

14. Verfahren nach einem der Ansprüche 9 bis 13, wobei das Kältemittel verflüssigtes Gas umfasst.

15. Verfahren nach einem der Ansprüche 9 bis 14, ferner ein Messen der Temperatur der ersten Kammer (18) und der zweiten Kammer (26) umfassend.

16. Verfahren nach Anspruch 15, ferner umfassend, wenn die Temperatur der ersten Kammer (18) gleich einem ersten Schwellenwert oder niedriger ist:
- Konfigurieren eines Kopplungsmittels (34), um zeitweilig Kältemittel aus der ersten Kammer (18) der äußeren Umgebung der Kühlvorrichtung (300) zuzuführen und ein Strömen von Kältemittel zwischen der ersten Kammer (18) und der zweiten Kammer (26) zu verhindern; und
- Betreiben eines zweiten Fluidregelungsmittels (16), um zu bewirken, dass Kältemittel mit einem anderen Volumenstrom in die zweite Kammer (26) strömt.

17. Verfahren nach Anspruch 16, wobei der andere Volumenstrom stärker als der Volumenstrom ist.

18. Verfahren nach Anspruch 16 oder 17, ferner umfassend, wenn die Temperatur der ersten Kammer (18) höher als der erste Schwellenwert ist und wenn die Temperatur der zweiten Kammer (26) höher als ein zweiter Schwellenwert ist, Konfigurieren der Kopplungsmittel (34), um zu bewirken, dass Kältemittel aus der ersten Kammer (18) in die zweite Kammer (26) strömt.

## Revendications

1. Appareil de réfrigération (300) comprenant :
- un moyen de stockage de réfrigérant (12) ;
- un premier compartiment (18) comprenant une entrée de réfrigérant en communication fluidique avec le moyen de stockage de réfrigérant (12) et une sortie d'évacuation de réfrigérant (38') ; et
- un deuxième compartiment (26) comprenant une entrée de réfrigérant en communication fluidique avec la sortie d'évacuation de réfrigérant (38') du premier compartiment (18), dans lequel l'appareil de réfrigération (300) est configuré pour alimenter un réfrigérant à partir du moyen de stockage de réfrigérant (12) vers le deuxième compartiment (26) par l'intermédiaire du premier compartiment (18), dans lequel le deuxième compartiment (26) comprend une sortie d'évacuation de réfrigérant (40') par laquelle le réfrigérant est mis à l'air libre vers l'extérieur de l'appareil de réfrigération (300),
dans lequel le premier compartiment (18) et le deuxième compartiment (26) sont configurés pour être à des températures différentes,
dans lequel le premier compartiment (18) et le deuxième compartiment (26) comprennent chacun un échangeur thermique (22, 30),
l'appareil de réfrigération (300) comprenant en outre :
- un premier moyen de commande de fluide (14) pour commander le débit auquel du réfrigérant s'écoule à partir du moyen de stockage de réfrigérant (12) le long d'un premier conduit vers le premier compartiment (18) ;
- un deuxième moyen de commande de fluide (16) pour commander le débit auquel du réfrigérant s'écoule à partir du moyen de stockage de réfrigérant (12) le long d'un deuxième conduit vers le deuxième compartiment (26) ;
- des capteurs de température (20, 28) pour mesurer la température à l'intérieur du premier compartiment (18) et à l'intérieur du deuxième compartiment (26) ; et
- un moyen de couplage (34) disposé entre le premier compartiment (18) et le deuxième compartiment (26), dans lequel le moyen de couplage (34) est configuré pour empêcher temporairement du réfrigérant de s'écouler entre le premier compartiment (18) et le deuxième compartiment (26), et pour coupler temporairement la sortie d'évacuation (38') du premier compartiment (18) à l'extérieur de l'appareil de réfrigération (300), dans lequel le premier moyen de commande de fluide (14) et le deuxième moyen de commande de fluide (16) sont configurés pour alimenter du réfrigérant dans le premier compartiment (18) et dans le deuxième compartiment (26) à des débits différents lorsqu'un écoulement de réfrigérant entre le premier compartiment (18) et le deuxième compartiment (26) est empêché ; et
- un dispositif de commande pour commander le moyen de couplage (34), le premier moyen de commande de fluide (14) et le deuxième moyen de commande de fluide (16) selon la température mesurée du premier compartiment (18) et du deuxième compartiment (26), de telle sorte que les températures du premier compartiment (18) et du deuxième compartiment (26) peuvent être commandées individuellement, dans lequel le dispositif de commande est configuré pour commander le moyen de couplage (34) pour empêcher temporairement du réfrigérant de s'écouler entre le premier compartiment (18) et le deuxième compartiment (26), et commander le deuxième moyen de commande de fluide (16) pour permettre à du réfrigérant de s'écouler dans le deuxième compartiment (26), lorsque la température du premier compartiment (18) est inférieure ou égale à un premier seuil ou température de consigne, et lorsque la température du deuxième compartiment (26) est supérieure à un deuxième seuil ou température de consigne, dans lequel la sortie d'évacuation (38') du premier compartiment (18) comprend un troisième moyen de commande de fluide (24) disposé entre le moyen de couplage (34) et l'extérieur de l'appareil de réfrigération (300).

2. Appareil de réfrigération selon la revendication 1,
- dans lequel la température du premier compartiment (18) est configurée pour être inférieure à 0 °C, ou inférieure à 10 °C, ou d'environ -20 °C ; et
- dans lequel la température du deuxième compartiment (26) est configurée pour être supérieure à 0 °C mais inférieure à 10 °C, ou supérieure à 2 °C mais inférieure à 10 °C, ou d'environ 5 °C.

3. Appareil de réfrigération selon la revendication 1 ou 2, dans lequel le réfrigérant comprend du gaz liquéfié.

4. Appareil de réfrigération selon l'une quelconque des revendications précédentes, comprenant en outre une pompe pour alimenter du réfrigérant à partir du moyen de stockage de réfrigérant (12) vers le premier compartiment (18).

5. Appareil de réfrigération selon l'une quelconque des revendications précédentes, comprenant en outre une deuxième pompe pour alimenter du réfrigérant à partir du moyen de stockage de réfrigérant (12) vers le deuxième compartiment (26).

6. Appareil de réfrigération selon l'une quelconque des revendications précédentes, dans lequel le dispositif de commande est configuré pour commander le débit auquel du réfrigérant s'écoule dans le premier compartiment (18) de telle sorte qu'il est supérieur au débit auquel du réfrigérant s'écoule dans le deuxième compartiment (26) lorsqu'un écoulement de réfrigérant entre le premier compartiment (18) et le deuxième compartiment (26) est empêché.

7. Appareil de réfrigération selon l'une quelconque des revendications précédentes, comprenant en outre une soupape unidirectionnelle (36) disposée entre le moyen de couplage (34) et un noeud couplant le premier moyen de commande de fluide (14) à la sortie d'évacuation (40') de la deuxième chambre (26), pour empêcher du réfrigérant de s'écouler dans le premier compartiment (18) par l'intermédiaire du deuxième moyen de commande de fluide (16).

8. Véhicule (10) comprenant l'appareil de réfrigération (300) selon l'une quelconque des revendications précédentes.

9. Procédé de commande d'un appareil de réfrigération (300) selon l'une quelconque des revendications précédentes, le procédé comprenant :
- l'alimentation d'un réfrigérant à partir d'un moyen de stockage de réfrigérant (12) vers le premier compartiment (18) par l'intermédiaire d'une entrée de réfrigérant en communication fluidique avec le moyen de stockage de réfrigérant (12) ; et
- l'alimentation de réfrigérant à partir du premier compartiment (18) vers le deuxième compartiment (26).

10. Procédé selon la revendication 9, dans lequel le débit de réfrigérant vers le premier compartiment (18) est essentiellement identique au débit vers le deuxième compartiment (26).

11. Procédé selon la revendication 9 ou 10, comprenant en outre
- le refroidissement du premier compartiment (18) à une première température, et
- le refroidissement du deuxième compartiment (26) à une deuxième température.

12. Procédé selon la revendication 11, dans lequel le débit est choisi de telle sorte que
- la température ambiante dans le premier compartiment (18) est suffisamment froide pour congeler des articles dans le premier compartiment (18), et
- la température ambiante dans le deuxième compartiment (26) est suffisamment froide pour refroidir des articles dans le deuxième compartiment (26).

13. Procédé selon la revendication 12, dans lequel le débit est d'environ 40 litres par heure.

14. Procédé selon l'une quelconque des revendications 9 à 13, dans lequel le réfrigérant comprend du gaz liquéfié.

15. Procédé selon l'une quelconque des revendications 9 à 14, comprenant en outre la mesure de la température du premier compartiment (18) et du deuxième compartiment (26).

16. Procédé selon la revendication 15, comprenant en outre, lorsque la température du premier compartiment (18) est inférieure ou égale à un premier seuil :
- la configuration d'un moyen de couplage (34) pour alimenter temporairement du réfrigérant à partir du premier compartiment (18) vers l'extérieur de l'appareil de réfrigération (300) et pour empêcher un écoulement de réfrigérant entre le premier compartiment (18) et le deuxième compartiment (26) ; et
- le fonctionnement d'un deuxième moyen de commande de fluide (16) pour alimenter du réfrigérant pour qu'il s'écoule à un débit différent dans le deuxième compartiment (26).

17. Procédé selon la revendication 16, dans lequel le débit différent est supérieur au débit.

18. Procédé selon la revendication 16 ou 17, comprenant en outre, lorsque la température du premier compartiment (18) est supérieure au premier seuil et lorsque la température du deuxième compartiment (26) est supérieure à un deuxième seuil, la configuration du moyen de couplage (34) pour alimenter du réfrigérant dans le premier compartiment (18) pour qu'il s'écoule dans le deuxième compartiment (26).
